# EUROPEAN PATENT SPECIFICATION

(11) **EP 3 220 177 B1**
(45) Date of publication and mention of the grant of the patent: **09.11.2022**
(21) Application number: 17158371.9
(22) Date of filing: 28.02.2017
(51) Int. Cl.: G02B 7/02, F41G 7/22

(54) **OPTICAL COMPONENT MOUNTING FOR HIGH-G APPLICATIONS**
HALTERUNG FÜR OPTISCHE KOMPONENTE FÜR HIGH-G-ANWENDUNGEN
MONTAGE DE COMPOSANT OPTIQUE POUR DES APPLICATIONS À G ÉLEVÉ

(30) Priority: 17.03.2016 US 201615073212
(43) Date of publication of application: 20.09.2017
(73) Proprietor: Rosemount Aerospace Inc., Burnsville, MN 55306-4898 (US)
(72) Inventor: DeAngelo, Tim, Edina, MN Minnesota 55424 (US)
(74) Representative: Dehns

(56) References cited:
- EP-A1- 0 414 004
- JP-A- H10 186 196
- JP-A- S61 162 011
- KR-A- 20100 137 681
- US-A- 3 747 530
- US-A- 4 669 241
- US-A- 5 853 149

## Description

### BACKGROUND

The invention relates to optical mounting for use in high mode environments. In particular the invention relates to optical mounting in high-G or shock environments such as those encountered in large munitions.

Brittle optical elements in gun launched projectiles may be exposed to high shock loads in excess of 20,000 Gs. This loading is generally in the direction normal to these components and causes high internal stresses and presents a challenge to the survivability of the components. Stress concentrations at contact points in an optical assembly in a projectile are other sources of failure during a launch. Efforts to eliminate failure origins in optical elements will result in increased component survival in high-G environments. US 5,853,149 A describes a stress-free dome mount missile design. EP 0414004 A1 describes an optoelectronic fuse. US4669241A and KR20100137681A relate to optical assemblies.

### SUMMARY

An optical assembly for a high-G application is described in claim 1 and includes an optical element formed from a brittle material. A rigid frame with a channel surrounds the outer diameter region of the optical element. A compliant material fills the space between the rigid frame and the outer diameter region of the optical element to prevent physical contact between the rigid frame and optical element during a high-G event. The compliant material comprises ceramic based cements, low melting point solders, copper, aluminum alloys, or mixtures thereof

A method of forming an optical assembly for high-G application is described in claim 5 and includes forming an optical element from a brittle material and forming a rigid channel that surrounds the outer perimeter region of the optical element. The method further includes filling the space between the optical element and the channel with a compliant material to prevent physical contact between the rigid frame and the optical element during a high-G event. The compliant material comprises ceramic based cements, low melting point solders, copper, aluminum alloys, or mixtures thereof.

### BRIEF DESCRIPTION OF THE DRAWINGS

FIG. 1 is a schematic cross-section of an optical assembly with cast compliant material.
FIG. 2 is a schematic cross-section of an optical assembly with compliant material in the form of a gasket.
FIG. 3 is a cross-section of a structure containing multiple optical assemblies.

### DETAILED DESCRIPTION

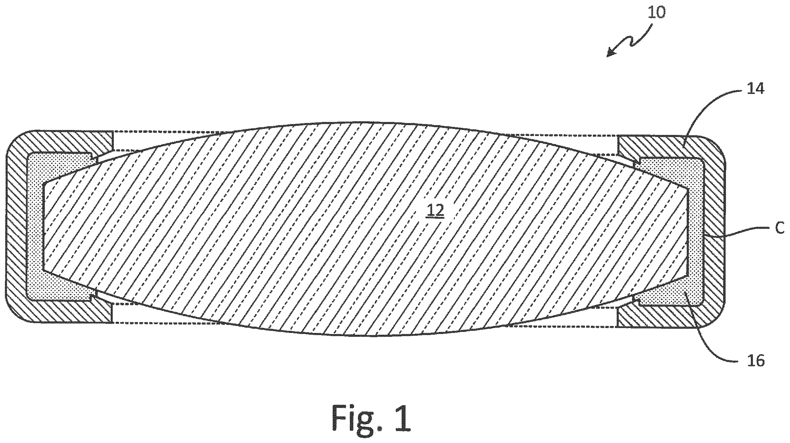

FIG. 1 is a schematic cross-section of optical assembly 10 according to an embodiment of the present invention. Optical assembly 10 includes circular optical element 12 surrounded by rigid body 14, wherein rigid body 14 contains channel C. Optical element 12 is formed from a brittle material into a shape where it performs optical functions such as focusing, defocusing, imaging or other optical functions known in the art of image processing. Optical assembly 10 may be a sub-component, for instance, in a guidance system in a missile or gun launched munition. Optical assembly 10 may be an optical system operating at wavelengths ranging across the entire electromagnetic spectrum and preferably in the IR, visible and UV spectrums.

In order to "harden" optical assembly 10 against the inertial loads experienced, for instance, in a gun launch, optical component 12 is designed to be protected against contact with a surface that would result in localized stress concentrations and possible fracture. As shown in FIG. 1, this isolation is achieved by filling the space between optical component 12 and rigid body 14 with compliant material 16 that will protect optical component 12 from contact with rigid body 14 during an event such as a gun launch. In examples not according to the invention, compliant material 16 may be silicone, epoxy, or other polymers such as urethanes, etc. In some applications, the materials may need to resist temperatures in excess of 200°C due to the extreme conditions surrounding a projectile during a rocket or gun launch. Low melting temperature metals such as solders may be acceptable to resist the high-G loads (up to 20,000 Gs) experienced in some cases. The compliant material is selected so it will not permanently deform due to loads, so that optical performance does not degrade. The compliant material may be inserted by injection from an initial semisolid state or by casting from an initial liquid state.

Rigid body 14 may be a metal, ceramic, metal ceramic composite or other material known to those in the art. The metal may be a copper, aluminum, titanium alloy, or may be any structural metal in various embodiments.

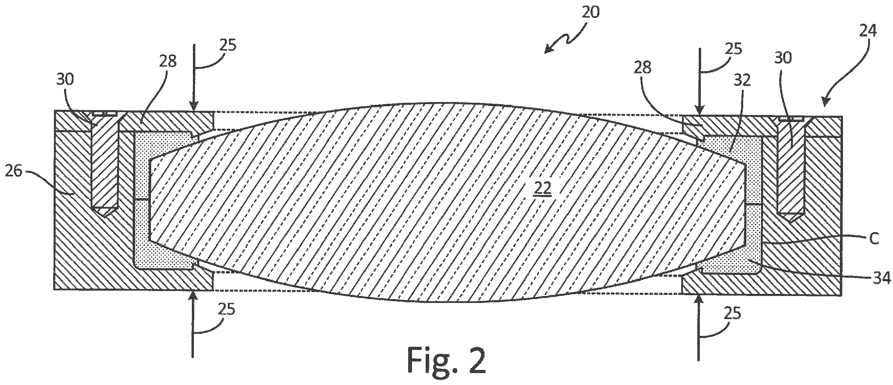

FIG. 2 is a schematic cross-section of optical assembly 20 according to another embodiment of the present invention. Optical assembly 20 includes optical element 22 surrounded by rigid body 24, wherein rigid body 24 contains channel C. Rigid body 24 may further include cup shaped base 26 and lid 28 secured to base 26 with screws 30. Optical element 22 is formed from a brittle material into a shape where it performs optical functions such as focusing, defocusing, imaging or other optical functions known in the art. Optical assembly 20 may be a sub-component of, for instance, a guidance system in a missile or gun launch munition. Optical assembly 20 may be an optical system operating at wavelengths ranging across the electromagnetic spectrum and preferably in the IR, visible and UV spectrums.

Optical assembly 20 is "hardened" against inertial loads experienced for instance in a gun launch by preventing optical element 22 from coming into contact with rigid body 24 during a launch. This is accomplished by filling the space between optical element 22 and rigid body 24 in channel C surrounding optical element 22 with a compliant material. In this embodiment, the compliant material may be in the form of a multi-piece gasket-like configuration comprising parts 32 and 34 surrounding optical element 22. To ensure close contact between parts 32, 34 and rigid body 24, the edges of rigid body 24 may be crimped by forcing the edges of rigid body 24 in the direction of arrows 25. In this embodiment, rigid body 24 may be formed of metal as mentioned above. In examples not according to the invention, compliant parts 32 and 34 may be soft metal alloys, solder, silicone, epoxy, or other high temperature polymers such as urethanes, etc. According to the invention, compliant parts 32 and 34 may be ceramic based cements, or may be aluminum or copper alloys that may be fabricated to form a close fit to optical element 22 before being crimped in place to secure optical element 22. In examples not according to the invention, a thin layer of compliant material such as a polymer may be inserted between gasket parts 32 and 34 and optical element 22 to further ensure a close fit to eliminate stress concentrations in optical element 22 during the high-G loading of a launch event.

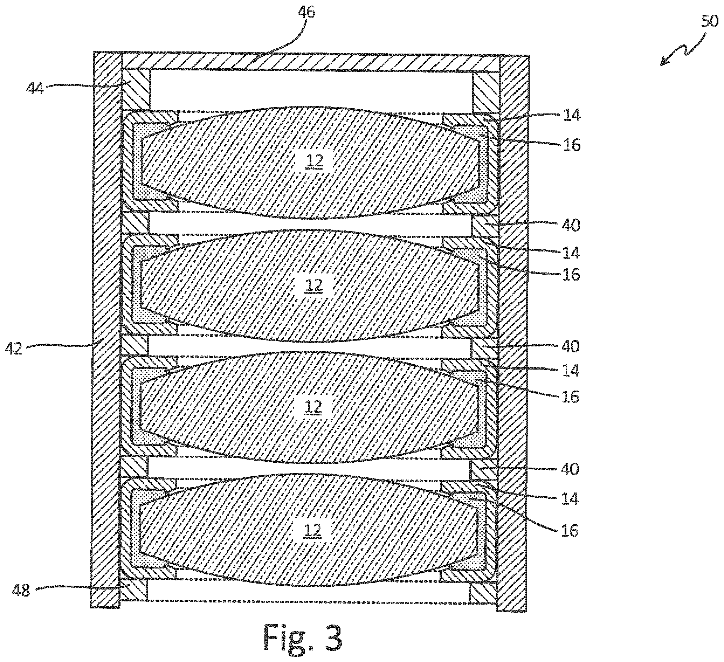

The design of optical assemblies 10, 20 and other similar assemblies allow hybrid multiple optical assemblies to be easily joined to enhance the diversity of an optical system. FIG. 3 is a schematic cross-section showing four optical assemblies 10 in hybrid optical assembly 50 with all components of each optical assembly 10 numbered as identified in FIG. 1. Each optical assembly 10 may be separated by a spacer 40 and may be surrounded by mounting cylinder 42. Window 46 may be mounted on spacer 44. Bottom spacer 48 may support the optical assemblies 10 in hybrid optical assembly 50. Each optical element 12 is securely mounted in compliant material 16 and may be guarded against contact with adjacent metal rigid body 14 during a high-G event, as discussed above with respect to FIG. 1. All components in optical assembly 50 may be mounted in cylinder 42 by means well known in the field of optics by, for instance, threaded connections.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation to the invention Therefore, it is intended that the invention not be limited to the particular embodiment(s) disclosed, but that the invention will include all embodiments falling within the scope of the appended claims.

## Claims

1. An optical assembly (20) for high-G impact applications comprising:
a circular optical element (22) formed from a brittle material, the circular optical element comprising:
an outer diameter surface;
a first curved optical surface radially spanning the outer diameter surface; and
a second curved optical surface, opposite the first curved optical surface, radially spanning the outer diameter surface;
a rigid frame (24) with a channel that surrounds outer diameter regions of the circular optical element, the outer diameter regions including the outer diameter surface of the circular optical element and a perimeter portion of the first and second curved optical surfaces of the circular optical element adjacent to the outer diameter surface; and
a compliant material (32, 34) that fills a space between the rigid frame and the outer diameter regions of the circular optical element within the channel such that the circular optical element is only in contact with the compliant material an the compliant material is in contact with at least a portion of the outer diameter surface and at least a portion of at least of the perimeter portions of the first and second curved optical surfaces, the compliant material (32, 34) comprises ceramic based cements, low melting point solders, copper, aluminum alloys, or mixtures thereof.

2. The optical assembly of claim 1, wherein the compliant material (32, 34) is injected or cast into the space between the rigid frame (24) and the outer diameter regions of the optical element (22).

3. The optical assembly of claim 1 or 2, wherein the compliant material (32, 34) is formed to match the shape and fill the space between the rigid frame (24) and the outer regions of the optical element (22), the compliant material (32, 34) completely filling the space between the rigid frame (24) and the outer regions of the optical element (22) by crimping of the channel.

4. The optical assembly of claim 1, 2 or 3, wherein the optical assembly (20) is mounted in a fixture with additional optical assemblies to form a hybrid optical assembly.

5. A method of forming an optical assembly for high-G impact applications comprising:
forming an optical element (22) from a brittle material, including an outer diameter surface, a first curved optical surface radially spanning the outer diameter surface, and a second curved optical surface, opposite the first curved optical surface, the second curved optical surface radially spanning the outer diameter surface;
forming a rigid frame (24) with a channel that surrounds outer diameter regions perimeter of the circular optical element (22), the outer diameter regions including the outer diameter surface of the circular optical element and a perimeter portion of the first and second curved optical surfaces of the circular optical element adjacent to the outer diameter surface; and
filing a space between the circular optical element (22) and the channel with a compliant material (32, 34) such that the circular optical element is only in contact with the compliant material and the compliant material is in contact with at least a portion of the outer diameter surface and at least a portion of the perimeter portions of the first and second curved optical surfaces, and **characterized by** the compliant material comprising ceramic based cements, low melting point solders, copper, aluminum alloys, or mixtures thereof.

6. The method of claim 5, wherein the compliant material (32, 34) is injected or cast into the space between the rigid frame (24) with the channel and the optical element (22).

7. The method of claim 5 or 6, wherein the compliant material (32, 34) is formed to fit the surrounding space between the rigid frame (24) and the outer diameter region of the optical element (22) where the compliant material (32, 34) completely fills the space between the rigid frame and the outer regions of the optical element (22) by crimping of the rigid frame (24) with the channel.

8. The method of claim 5, 6 or 7, wherein the optical assembly (20) is mounted in a fixture with additional optical assemblies to form a hybrid optical assembly.

## Patentansprüche

1. Optische Baugruppe (20) für High-G-Aufprallanwendungen, umfassend:
ein kreisförmiges optisches Element (22), das aus einem spröden Material gebildet ist, wobei das kreisförmige optische Element umfasst:
eine Außendurchmesserfläche;
eine erste gekrümmte optische Fläche, die die Außendurchmesserfläche radial überspannt; und
eine zweite gekrümmte optische Fläche gegenüber der ersten gekrümmten optischen Fläche, die die Außendurchmesserfläche radial überspannt;
einen starren Rahmen (24) mit einem Kanal, der Außendurchmesserbereiche des kreisförmigen optischen Elements umgibt, wobei die Außendurchmesserbereiche die Außendurchmesserfläche des kreisförmigen optischen Elements und einen Umfangsabschnitt der ersten und zweiten gekrümmten optischen Fläche des kreisförmigen optischen Elements benachbart zu der Außendurchmesserfläche beinhalten; und
ein nachgiebiges Material (32, 34), das einen Raum zwischen dem starren Rahmen und den Außendurchmesserbereichen des kreisförmigen optischen Elements innerhalb des Kanals füllt, derart, dass das kreisförmige optische Element nur mit dem nachgiebigen Material in Kontakt steht und das nachgiebige Material mit mindestens einem Abschnitt der Außendurchmesserfläche und mindestens einem Abschnitt des Umfangsabschnitts der ersten und zweiten gekrümmten optischen Fläche steht, wobei das nachgiebige Material (32, 34) Zemente auf Keramikbasis, Lötmittel mit niedrigem Schmelzpunkt, Kupfer, Aluminiumlegierungen oder Gemische derselben umfasst.

2. Optische Baugruppe nach Anspruch 1, wobei das nachgiebige Material (32, 34) in den Raum zwischen dem starren Rahmen (24) und den Außendurchmesserbereichen des optischen Elements (22) gespritzt oder gegossen wird.

3. Optische Baugruppe nach Anspruch 1 oder 2, wobei das nachgiebige Material (32, 34) so bildet ist, dass es sich an die Form anpasst und den Raum zwischen dem starren Rahmen (24) und den Außendurchmesserbereichen des optischen Elements (22) füllt, wobei das nachgiebige Material (32, 34), den Raum zwischen dem starren Rahmen (24) und den Außendurchmesserbereichen des optischen Elements (22) durch Eindrücken des Kanals vollständig füllt.

4. Optische Baugruppe nach Anspruch 1, 2 oder 3, wobei die optische Baugruppe (20) in einer Halterung mit zusätzlichen optischen Baugruppen montiert ist, um eine hybride optische Baugruppe zu bilden.

5. Verfahren zum Bilden einer optischen Baugruppe für High-G-Aufprallanwendungen, umfassend:
Bilden eines optischen Elements (22) aus einem spröden Material, das eine Außendurchmesserfläche, eine erste gekrümmte optische Fläche, die die Außendurchmesserfläche radial überspannt, und
eine zweite gekrümmte optische Fläche gegenüber der ersten gekrümmten optischen Fläche beinhaltet, wobei die zweite gekrümmte optische Fläche die Außendurchmesserfläche radial überspannt;
Bilden eines starren Rahmens (24) mit einem Kanal, der den Umfang von Außendurchmesserbereichen des kreisförmigen optischen Elements (22) umgibt, wobei die Außendurchmesserbereiche die Außendurchmesserfläche des kreisförmigen optischen Elements und einen Umfangsabschnitt der ersten und zweiten gekrümmten optischen Fläche des kreisförmigen optischen Elements benachbart zu der Außendurchmesserfläche beinhalten; und
Füllen eines Raums zwischen dem kreisförmigen optischen Element (22) und dem Kanal mit einem nachgiebigen Material (32, 34), derart, dass das kreisförmige optische Element nur mit dem nachgiebigen Material in Kontakt steht und das nachgiebige Material mit mindestens einem Abschnitt der Außendurchmesserfläche und mindestens einem Abschnitt des Umfangsabschnitts der ersten und zweiten gekrümmten optischen Fläche steht, und **dadurch gekennzeichnet, dass** das nachgiebige Material Zemente auf Keramikbasis, Lötmittel mit niedrigem Schmelzpunkt, Kupfer, Aluminiumlegierungen oder Gemische derselben umfasst.

6. Verfahren nach Anspruch 5, wobei das nachgiebige Material (32, 34) in den Raum zwischen dem starren Rahmen (24) mit dem Kanal und dem optischen Element (22) gespritzt oder gegossen wird.

7. Verfahren nach Anspruch 5 oder 6, wobei das nachgiebige Material (32, 34) so gebildet wird, dass es den umgebenden Raum zwischen dem starren Rahmen (24) und dem Außendurchmesserbereich des optischen Elements (22) füllt, wobei das nachgiebige Material (32, 34) den Raum zwischen dem starren Rahmen und den Außenbereichen des optischen Elements (22) durch Eindrücken des starren Rahmens (24) mit dem Kanal vollständig füllt.

8. Verfahren nach Anspruch 5, 6 oder 7, wobei die optische Baugruppe (20) in einer Halterung mit zusätzlichen optischen Baugruppen montiert wird, um eine hybride optische Baugruppe zu bilden.

## Revendications

1. Ensemble optique (20) pour des applications d'impact à G élevé comprenant :
un élément optique circulaire (22) formé à partir d'un matériau fragile, l'élément optique circulaire comprenant :
une surface de diamètre extérieur ;
une première surface optique incurvée s'étendant radialement sur la surface de diamètre extérieure ; et
une seconde surface optique incurvée, opposée à la première surface optique incurvée, s'étendant radialement sur la surface de diamètre extérieur ;
un cadre rigide (24) avec un canal qui entoure des régions de diamètre extérieur de l'élément optique circulaire, les régions de diamètre extérieur comportant la surface de diamètre extérieur de l'élément optique circulaire et une partie de périmètre des première et seconde surfaces optiques incurvées de l'élément optique circulaire adjacentes à la surface de diamètre extérieur ; et
un matériau souple (32, 34) qui remplit un espace entre le cadre rigide et les régions de diamètre extérieur de l'élément optique circulaire à l'intérieur du canal de sorte que l'élément optique circulaire est uniquement en contact avec le matériau souple et que le matériau souple est en contact avec au moins une partie de la surface de diamètre extérieur et au moins une partie d'au moins les parties de périmètre des première et seconde surfaces optiques incurvées, le matériau souple (32, 34) comprend des ciments à base de céramique, des soudures à bas point de fusion, du cuivre, des alliages d'aluminium ou des mélanges de ceux-ci.

2. Ensemble optique selon la revendication 1, dans lequel le matériau souple (32, 34) est injecté ou coulé dans l'espace entre le cadre rigide (24) et les régions de diamètre extérieur de l'élément optique (22).

3. Ensemble optique selon la revendication 1 ou 2, dans lequel le matériau souple (32, 34) est formé pour épouser la forme et remplir l'espace entre le cadre rigide (24) et les régions extérieures de l'élément optique (22), le matériau souple (32, 34) remplissant complètement l'espace entre le cadre rigide (24) et les régions extérieures de l'élément optique (22) par sertissage du canal.

4. Ensemble optique selon la revendication 1, 2 ou 3, dans lequel l'ensemble optique (20) est monté dans un montage avec des ensembles optiques supplémentaires pour former un ensemble optique hybride.

5. Procédé de formation d'un ensemble optique pour des applications d'impact à G élevé comprenant :
la formation d'un élément optique (22) à partir d'un matériau fragile, comportant une surface de diamètre extérieur, une première surface optique incurvée s'étendant radialement sur la surface de diamètre extérieur, et une seconde surface optique incurvée, opposée à la première surface optique incurvée, la seconde surface optique incurvée s'étendant radialement sur la surface de diamètre extérieur ;
la formation d'un cadre rigide (24) avec un canal qui entoure le périmètre des régions de diamètre extérieur de l'élément optique circulaire (22), les régions de diamètre extérieur comportant la surface de diamètre extérieur de l'élément optique circulaire et une partie de périmètre des première et seconde surfaces optiques incurvées de l'élément optique circulaire adjacentes à la surface de diamètre extérieur ; et
le remplissage d'un espace entre l'élément optique circulaire (22) et le canal avec un matériau souple (32, 34) de sorte que l'élément optique circulaire est uniquement en contact avec le matériau souple et le matériau souple est en contact avec au moins une partie de la surface de diamètre extérieur et au moins une partie des parties de périmètre des première et seconde surfaces optiques incurvées, et **caractérisé en ce que** le matériau souple comprend des ciments à base de céramique, des soudures à bas point de fusion, du cuivre, des alliages d'aluminium ou leurs mélanges.

6. Procédé selon la revendication 5, dans lequel le matériau souple (32, 34) est injecté ou coulé dans l'espace entre le cadre rigide (24) avec le canal et l'élément optique (22).

7. Procédé selon la revendication 5 ou 6, dans lequel le matériau souple (32, 34) est formé pour s'adapter à l'espace environnant entre le cadre rigide (24) et la région de diamètre extérieur de l'élément optique (22) où le matériau souple (32, 34) remplit complètement l'espace entre le cadre rigide et les régions extérieures de l'élément optique (22) par sertissage du cadre rigide (24) avec le canal.

8. Procédé selon la revendication 5, 6 ou 7, dans lequel l'ensemble optique (20) est monté dans un montage avec des ensembles optiques supplémentaires pour former un ensemble optique hybride.
